# EUROPÄISCHE PATENTANMELDUNG

(11) **EP 2 781 720 A1**
(43) Veröffentlichungstag der Anmeldung: **24.09.2014**
(21) Anmeldenummer: 13159874.0
(22) Anmeldetag: 19.03.2013
(51) Int. Cl.: F02C 7/32, F02C 7/36, F16H 57/08

(54) **Kraftwerksanlage sowie Verfahren zur elektrischen Energieerzeugung und Netzeinspeisung**

(71) Anmelder: Siemens Aktiengesellschaft, 80333 München (DE)
(72) Erfinder: Haas, Sebastian, 91336 Heroldsbach (DE)

(57) **Zusammenfassung**

Die Erfindung betrifft eine Kraftwerksanlage (1) mit einer Turbine (2) und mit einem Generator (3), wobei eine erste Welle (4) eines Überlagerungsgetriebes (5) mit der Turbine (2), eine zweite Welle (6) des Überlagerungsgetriebes (5) mit dem Generator (3) und eine dritte Welle (7) des Überlagerungsgetriebes (5) mit einem Nebengenerator (8) verbunden ist, wobei die dritte Welle (7) drehzahlgeregelt ist. Die Erfindung betrifft ferner ein Verfahren zur elektrischen Energieerzeugung und Netzeinspeisung.

## Beschreibung

Die Erfindung betrifft eine Kraftwerksanlage und bezieht sich auf die Steigerung des Teillastwirkungsgrades von Gas-, Dampf- und Industriedampfturbinen durch Entkopplung der Turbinendrehzahl von der Netzfrequenz mit Hilfe eines Überlagerungsgetriebes. Die Erfindung betrifft ferner ein Verfahren zur elektrischen Energieerzeugung und Netzeinspeisung, insbesondere bei Teillast.

Thermische Kraftwerke wie z.B. Kohle-, GuD- oder Kernkraftwerke werden in der Regel so ausgelegt, dass ihr Wirkungsgrad im Volllastbetrieb am höchsten ist. Im Teillastbereich sinkt der Wirkungsgrad deutlich. Da thermische Kraftwerke vor allem in Europa durch die Einspeisung aus erneuerbaren Energiequellen (Wind, Solar) immer öfter im Teillastbereich betrieben werden, wird eine Steigerung des Teillastwirkungsgrades wirtschaftlich immer interessanter.

Industriedampfturbinen werden häufig im Zusammenhang mit Dampfentnahmen eingesetzt und daher bei wechselnden Lasten betrieben. Ein hoher Teillastwirkungsgrad durch Drehzahlregelung ist daher auch hier wirtschaftlich sehr interessant.

Die großen Turbomaschinen, d.h. Dampfturbinen und Gasturbinen, welche den Generator antreiben, sind aber üblicherweise über die Generatordrehzahl direkt an die Netzfrequenz gekoppelt. Dies bedeutet, dass sie unabhängig von der Anlagenlast stets mit annähernd der gleichen Drehzahl laufen. Sinkt die Last, so wirkt sich dies negativ auf den Wirkungsgrad aus, da sich die Strömungsverhältnisse in den Turbomaschinen verglichen mit dem Auslegungszustand verschlechtern. Die Umfangsgeschwindigkeit der Laufschaufeln bleibt konstant, während sich die Strömungsgeschwindigkeit in axialer Richtung verringert.

Dadurch werden die Turbinenschaufeln (und auch die Verdichterschaufeln) in Teillast ungünstiger angeströmt.

Bei Dampfturbinen tritt zudem häufig das Problem auf, dass mit dem absinkenden Wirkungsgrad in Teillast die Abdampftemperaturen ansteigen, was zu höheren Kosten für die Auslegung und das Material der Gehäuse und Rohrleitungen und/oder zu betrieblichen Einschränkungen führt.

Ein weiterer Nachteil der starren Kopplung der Maschinendrehzahl an die Netzfrequenz ist speziell bei Gasturbinen, dass bei Absinken der Netzfrequenz die maximale Verdichterleistung und damit die maximale elektrische Leistung des Kraftwerks verringert wird, obwohl gerade dann das Kraftwerk mehr Leistung einspeisen müsste, um die Netzfrequenz zu stabilisieren bzw. wieder zu erhöhen.

Für Kleinstanlagen wurden Studien durchgeführt, in welchen die Entkopplung von Netz und Generator durch Frequenzumrichter untersucht wurde (Dr. J. Hampel, "Getriebefreie Kleindampfturbine", VGB PowerTech 4/2008, Seiten 75-80).

Bei großtechnischen Anlagen gab es bislang zur starren Kopplung der Turbosatzdrehzahl an die Netzfrequenz keine Alternative, weil Frequenzumrichter oder hydrodynamische Kupplungen für die gesamte Kraftwerksleistung nicht bezahlbar sind. Ferner fällt der Wirkungsgradvorteil im Teillastbereich gering aus und verschlechtert sich bei Volllast.

Um die Leistung von GuD- Kraftwerken bei absinkender Netzfrequenz wieder zu erhöhen, kommen verschiedene Verfahren zum Einsatz, welche aber oft zu Lasten der Lebensdauer gehen und meist mit zusätzlichen Kosten verbunden sind.

Aufgabe der Erfindung ist es daher, die genannte Vorrichtung und das genannte Verfahren für großtechnische Kraftwerksanlagen weiterzuentwickeln, so dass bei möglichst geringer Anlagenkomplexität und vergleichsweise moderaten Investitionskosten auch bei Teillast ein hoher Anlagenwirkungsgrad sichergestellt ist.

Erfindungsgemäß wird diese Aufgabe gelöst durch die Vorrichtung gemäß Anspruch 1 und das Verfahren gemäß Anspruch 12. Vorteilhafte Weiterbildungen der Erfindung sind in den jeweiligen abhängigen Ansprüchen definiert. Indem bei einer Kraftwerksanlage mit einer Turbine und mit einem Generator eine erste Welle eines Überlagerungsgetriebes mit der Turbine, eine zweite Welle des Überlagerungsgetriebes mit dem Generator und eine dritte Welle des Überlagerungsgetriebes mit einem Nebengenerator verbunden ist, wobei die dritte Welle drehzahlgeregelt ist, wird folgendes erreicht:

Infolge der nun möglichen Anpassung der Drehzahl der Turbine entsprechend dem Volumenstrom des durch sie hindurchströmenden Arbeitsmediums erhöht sich der Wirkungsgrad von Turbinen und gegebenenfalls Verdichtern, da die Strömungsverhältnisse in Teillast dann wieder ähnlich denen bei Volllast sind, für die die Anlage ausgelegt ist.

Es wird vorgeschlagen, die Drehzahl der Antriebsmaschine, beispielsweise der Dampf- und/oder der Gasturbine, mit Hilfe eines Überlagerungsgetriebes entsprechend der Anlagenlast zu regeln. Ein Überlagerungsgetriebe oder auch Planetenumlaufgetriebe verfügt im Vergleich zu einem konventionellen Übersetzungsgetriebe über einen weiteren Freiheitsgrad. Um an einer der drei Wellen des Getriebes die Drehzahl vorzugeben, müssen an den zwei anderen Wellen die Drehzahlen entsprechend eingestellt werden.

Erfindungsgemäß liegen an den drei genannten Wellen des Überlagerungsgetriebes die Antriebsmaschine (Turbine), der Hauptgenerator und der Nebengenerator an. Der Hauptgenerator, der den größten Teil der elektrischen Leistung ins Netz abgibt, ist starr mit der Netzfrequenz gekoppelt.

In einer vorteilhaften Ausführungsform der Erfindung ist der Nebengenerator über einen Frequenzumrichter in ein elektrisches Stromnetz koppelbar.

Mit Hilfe des Frequenzumrichters kann die Drehzahl des Nebengenerators und somit die Drehzahl der Antriebsmaschine unabhängig von der Netzfrequenz eingestellt werden. Die Leistungen von Haupt- und Nebengenerator summieren sich zur Gesamtleistung der Anlage.

Da die Leistung des Nebengenerators nur einen Bruchteil der Gesamtleistung ausmacht, sind die Investitionskosten für den Umrichter verhältnismäßig gering. Da die Summe der Leistungen von Neben- und Hauptgenerator der Gesamtleistung der Anlage entspricht, würden die Kosten für die zwei Generatoren im Vergleich zu einem einzigen, großen Generator, wenn überhaupt, nur moderat ansteigen.

In einer weiteren vorteilhaften Ausführungsform der Erfindung ist zur Drehzahlregelung der dritten Welle eine hydrodynamische Kupplung oder ein hydrodynamischer Wandler zwischen Überlagerungsgetriebe und Nebengenerator in die dritte Welle geschaltet. Dies stellt eine mechanische Alternative zur "elektrischen" Lösung mit dem Frequenzumrichter dar. Der Nebengenerator würde in diesem Fall auch mit Netzfrequenz laufen.

Wie bereits ausgeführt sind Frequenzumrichter oder hydrodynamische Kupplungen für die gesamte Kraftwerksleistung vergleichsweise teuer und sie würden den Wirkungsgrad in Teillast nur geringfügig verbessern und in Volllast im Durchschnitt eher noch verschlechtern. Daher ist es zweckmäßig, wenn der Nebengenerator eine geringere Leistung aufweist als der Generator.

Insbesondere ist es zweckmäßig, wenn eine Leistungsgröße des Frequenzumrichters 5 % bis 25% einer elektrischen Leistung der Kraftwerksanlage beträgt. Geht man nämlich davon aus, dass die optimale Drehzahl im Lastbereich zwischen 50% und 100% mit einer Drehzahlvariation zwischen 90% und 100% der Nenndrehzahl abgedeckt werden kann, so ergibt sich daraus eine erforderliche Größe des Frequenzumrichters für den Nebengenerator von ca. einem Zehntel der elektrischen Gesamtleistung.

Um z.B. eine 200MW- Dampfturbine im oben genannten Bereich drehzahlgeregelt zu betreiben, würde ein Frequenzumrichter mit ca. 20MW elektrischer Leistung benötigt, was der Leistung zweier drehzahlgeregelter Speisewasserpumpen in einem Kernkraftwerk entspräche. Die Investitionskosten für den Umrichter lägen zurzeit in der Größenordnung von ungefähr 1,5 Mio. Euro.

Die Verluste aufgrund des Frequenzumrichters fallen infolge der Leistungsverzweigung auch bei Volllast entsprechend gering aus.

Für das Planetengetriebe gibt es eine große Auswahl an Varianten und Kombinationsmöglichkeiten. So kann es je nach Getriebeausführung eine unterschiedliche optimale Anordnung von Generator, Nebengenerator und Turbine um die drei Wellen des Überlagerungsgetriebes geben. Vorzugsweise ist das Überlagerungsgetriebe ein Verteilgetriebe, bei dem die Turbine auf einer antreibenden ersten Welle und der Generator und der Nebengenerator auf von dieser gemeinsam angetriebenen zweiten und dritten Wellen sitzen. Es wäre aber möglich, die Leistung des Nebengenerators und damit die Kosten für den Umrichter noch weiter zu verringern, indem der Nebengenerator je nach Lastbereich sowohl als Motor als auch als Generator betrieben wird, was sich aber in manchen Lastbereichen nachteilig auf den Wirkungsgrad auswirken würde.

In einer konkreten Ausführungsform der Erfindung ist es vorteilhaft, wenn Umlaufräder des Überlagerungsgetriebes mit der ersten Welle an die Turbine gekoppelt sind, ein zentrales Sonnenrad des Überlagerungsgetriebes mit der zweiten Welle an den Generator gekoppelt ist und ein Hohlrad des Überlagerungsgetriebes über die dritte Welle an den Nebengenerator gekoppelt ist.

Es ist zweckmäßig, wenn die Kraftwerksanlage eine mit dem Überlagerungsgetriebe verbundene Dampfturbine umfasst, da schon beim Startvorgang die Drehzahl der Dampfturbine (bei Mehrwellenanlagen) über den Nebengenerator so eingestellt werden könnte, wie es für die Komponenten am vorteilhaftesten wäre. Die Dampfturbine würde ihre Drehzahl nicht zwangsläufig entsprechend dem großen Massenträgheitsmoment des Generators verändern. Je nach Auslegung des Umrichters könnte die Drehzahl sogar in beiden Richtungen geregelt werden, d.h. das Anfahren der Dampfturbine auf die erforderliche Drehzahl kann langsamer oder schneller durchgeführt werden. Kritische Drehzahlbereiche könnten schneller durchlaufen werden.

Zudem würde ein weiterer Vorteil mit der Wirkungsgradverbesserung einhergehen: Durch den höheren Teillastwirkungsgrad sinkt die Abdampftemperatur am Ende der Dampfturbine, welche bisweilen ohne aufwändige Maßnahmen die Auslegungstemperatur in manchen Betriebsfällen überschreiten würde.

Weiterhin ist es zweckmäßig, wenn die Kraftwerksanlage eine mit dem Überlagerungsgetriebe verbundene Gasturbine umfasst. Es muss nämlich beachtet werden, dass sich eine Drehzahlanpassung auch positiv auf den Wirkungsgrad des Gasturbinenverdichters auswirkt und daher gerade bei Gasturbinen von besonderem Interesse ist. Vermutlich können in Teillast Wirkungsgradverbesserungen (elektrischer Wirkungsgrad) im einstelligen Prozentbereich erzielt werden.

Mit Hilfe der Drehzahlregelung der Gasturbine kann der oben erwähnte Effekt, dass normalerweise bei Absinken der Netzfrequenz die maximale Leistung der Gasturbine durch die geringere Verdichterleistung sinken würde, umgangen werden. Durch die Entkopplung der Gasturbinendrehzahl von der Netzfrequenz würde auch die Fähigkeit der Kraftwerke, die Netzfrequenz zu stützen, zunehmen. Derzeit gängige Maßnahmen zur temporären Leistungssteigerung, die die Lebensdauer der Komponenten verringern, würden nicht mehr benötigt. Dadurch würden sich Einsparungen ergeben, die wiederum die zusätzlichen Investitionskosten für die Drehzahlregelung zumindest teilweise kompensieren.

In Fällen, in denen die Kraftwerksanlage eine mit dem Überlagerungsgetriebe verbundene Gasturbine umfasst, kann es je nach Getriebe- und Umrichterauslegung vorteilhaft sein, wenn die Gasturbine mit dem Frequenzumrichter anfahrbar ist. Dies kann entweder bei entsprechender Auslegung des Überlagerungsgetriebes über den Nebengenerator erfolgen. Typischer Weise wird es aber eine bevorzugte Ausgestaltung der Erfindung sein, wenn zum Anfahren der Gasturbine der Frequenzumrichter auf den Generator umschaltbar ist. Jedenfalls könnte der für das Anfahren der Gasturbine benötigte Anfahrumrichter durch den zur Drehzahlregelung benötigten Frequenzumrichter ersetzt werden. Dies würde die Investitionskosten für die Drehzahlregelung wiederum reduzieren.

Nicht nur beim Anfahren bietet das Überlagerungsgetriebe gemäß der vorliegenden Erfindung Vorteile. Die Zeit, die der Turbosatz z.B. nach Abstellen oder Trip der Turbine braucht, um zum Stillstand zu kommen, kann deutlich verkürzt werden, ohne dass Komponenten zusätzlich belastet werden. Der Nebengenerator würde als Bremse wirken und die verbleibende Rotationsenergie über den Umrichter ins Netz abgeben.

In Gas- und Dampfturbinenanlagen könnte die Entkopplung der Maschinendrehzahl von der Netzfrequenz mittels Überlagerungsgetriebe auf verschiedene Arten angewendet werden:

Bei bestimmten Einwellenanlagen sitzt der Generator nicht zwischen Gasturbine und Dampfturbine, sondern wird über eine gemeinsame Antriebswelle von beiden Turbinen angetrieben. Hier wäre es möglich, die Drehzahl von Gas- und Dampfturbine simultan mit Hilfe eines Frequenzumrichters zu variieren.

Bei Mehrwellenanlagen könnte es sich lohnen, entweder nur die Dampfturbine, nur eine Gasturbine, mehrere Gasturbinen oder alle Turbinen mit der Drehzahlregelung auszustatten. Vielfältige, anwendungsspezifische Lösungen wären hier möglich. Da die Dampfturbine von Mehrwellenanlagen über die Lebensdauer der Anlage öfter und weiter im Teillastbereich gefahren wird als bei Einwellenanlagen, wäre die Drehzahlregelung zur Erhöhung des Teillastwirkungsgrades in diesem Falle besonders interessant.

Das Prinzip der Drehzahlregelung könnte in verschiedenen Kraftwerkstypen eingesetzt werden, d.h. auch in Kernkraft- oder Kohlekraftwerken.

In Wasserkraftwerken werden ohnehin Drehzahlregelungen benötigt und bereits eingesetzt. Die gängigen Methoden wie z.B. hydrodynamische Kupplungen oder Wandler, könnten durch das hier vorgeschlagene Prinzip des Überlagerungsgetriebes kostengünstig und effizient ersetzt werden.

Schließlich ist es zweckmäßig, wenn die Kraftwerksanlage weiterhin eine Einrichtung zur Berechnung und Regelung eines Drehzahlsollwertes der Turbine umfasst, bei welcher der Drehzahlsollwert beispielsweise in Abhängigkeit einer Leistung der Kraftwerksanlage ermittelt wird.

Erfindungsgemäß wird die auf ein Verfahren gerichtete Aufgabe gelöst durch ein Verfahren zur elektrischen Energieerzeugung und Netzeinspeisung, bei dem eine Turbine eine erste Welle mit einem Drehmoment antreibt, und das Drehmoment auf eine zweite Welle mit einem Generator und eine dritte Welle mit einem Nebengenerator verteilt wird, wobei der Generator starr mit einer Netzfrequenz gekoppelt seine elektrische Leistung in ein Stromnetz abgibt und die dritte Welle zum Nebengenerator, dessen elektrische Leistung geringer ist als die elektrische Leistung des Generators, drehzahlgeregelt wird.

Eine Weiterbildung der Erfindung sieht vor, dass der Nebengenerator seine elektrische Leistung über einen Frequenzumrichter in das Stromnetz abgibt.

Es kann vorgesehen sein, die Gasturbine mit Hilfe des Frequenzumrichters anzufahren. Dies kann entweder über den Nebengenerator erfolgen oder indem der Frequenzumrichter auf den Generator umgeschaltet wird.

Die Welle der Kraftwerksanlage wird im sogenannten Stillstand über ein elektrisches oder hydraulisches Drehwerk mit geringer Drehzahl, d.h. rund 60/min, angetrieben, um ein Durchhängen und Verbiegen der Welle zu verhindern. Es kann vorgesehen sein, das Drehwerk durch den Umrichter, welcher die Maschine mit Hilfe des Nebengenerators antreibt, zu ersetzen, so dass der Frequenzumrichter die Turbine im Stillstand mit einer Drehzahl unter 5/s, insbesondere unter 2/s dreht. Dies würde wiederum eine Kosteneinsparung ergeben, die den zusätzlichen Investitionskosten für die Drehzahlregelung entgegenwirkt.

Des Weiteren kann vorgesehen sein, dass eine Drehzahlregelung der dritten Welle über eine hydrodynamische Kupplung oder einen hydrodynamischen Wandler erfolgt.

Gemäß einer Ausgestaltung ist beispielsweise vorgesehen, dass ein Drehzahlsollwert für die Turbine anhand einer elektrischen Leistung berechnet und die berechnete Drehzahl über den Frequenzumrichter oder über die hydrodynamische Kupplung oder den hydrodynamischen Wandler eingestellt wird.

Alternativ kann vorgesehen sein, dass ein Drehzahlsollwert für die Turbine über eine Auswertung thermodynamischer Parameter bestimmt wird.

Mit dem erfinderischen Verfahren besteht nun die Möglichkeit, dass sich die in Teillast betriebene Turbine vorteilhafter Weise mit einer Frequenz unterhalb einer Nennfrequenz, also einer typischen Frequenz bei Nennlast, dreht.

Genauso kann es aber vorteilhaft sein, wenn die Turbine bei absinkender Netzfrequenz oder bei Überlast mit höherer Frequenz als die Netzfrequenz dreht.

Wird die Turbinendrehzahl geändert, ist es vorteilhaft, wenn eine Optimierung einer Turbinenbeschaufelung erfolgt.

Bei modernen Gasturbinen für wird die Austrittstemperaturregelung im Wesentlichen durch die Leitschaufelverstellung im Verdichter vorgenommen. Die Brennkammer kann dabei mit nahezu konstantem Luftverhältnis betrieben werden, wodurch auch bei Teillast niedrige Schadstoffemissionen erzielbar sind. Gemäß einer Ausgestaltung der Erfindung kann vorgesehen sein, dass eine Austrittstemperaturregelung zumindest teilweise über eine Drehzahlregelung erfolgt, d.h. dass die Drehzahlregelung die Funktion der Leitschaufelverstellung übernimmt. Damit würde sich die optimale Drehzahl automatisch ergeben und es könnten Kosten bei der Leitschaufelverstellung eingespart werden.

Ein weiterer Vorteil, der sich aus der Drehzahlregelung von Kraftwerksturbinen ergeben könnte, wäre ein erweiterter Fahrbereich, da es vermutlich möglich sein wird, durch eine Drehzahlregelung von Gasturbinen die Mindestlast weiter abzusenken als es verglichen mit einer reinen Leitschaufelverstellung möglich wäre.

Zudem könnte auch ein Luftvorwärmsystem, das für die Erreichung einer Teillast vorgesehen wäre, eingespart werden.

Evtl. wäre auch eine Zwitter-Lösung denkbar, bei der die Gasturbinen-Austrittstemperaturregelung im normalen Fahrbereich über die Drehzahlregelung und bei sehr niedriger Last über eine kostengünstige Verstellung der Eintrittsleitschaufeln (IGVs) durchgeführt wird. Damit könnte trotzdem noch eine Kostenersparnis bei der Leitschaufelverstellung (der ersten Verdichterstufen) erzielt werden.

Die vorgeschlagene Drehzahlregelung könnte auch bei Industriedampfturbinen eingesetzt werden, welche in der Regel kleinere Leistungen haben als große Kraftwerksturbinen. Da Industriedampfturbinen insbesondere im Zusammenhang mit Dampfentnahmen eingesetzt werden, werden sie bei häufig wechselnden Lasten betrieben. Ein hoher Teillastwirkungsgrad durch Drehzahlregelung wäre daher wirtschaftlich sehr interessant.

Auf Grund der geringeren Größe der Industrieturbinen im Vergleich zu Kraftwerksturbinen sind zusätzliche Kosten und Platzbedarf für die Drehzahlregelung mittels Überlagerungsgetriebe überschaubar.

Eine Drehzahlregelung für Turbinen großer thermischer Kraftwerke ist bislang nicht bekannt und wurde auf Grund der hohen Investitionskosten nicht in Betracht gezogen.

Da sich die Leistungen von Haupt- und Nebengenerator zur Gesamtleistung addieren, sind die Generatorkosten im Vergleich zu einem einzelnen, großen Generator wenn überhaupt nur geringfügig höher.

Da die Drehzahl der Turbine allein über die Drehzahlregelung des kleinen Nebengenerators vorgegeben wird, kann ein kleiner und somit kostengünstiger Umrichter eingesetzt werden. Entsprechend wären auch die Verluste aufgrund der geringen Größe des Nebengenerators bzw. Umrichters vergleichsweise gering.

Das Prinzip, die Drehzahlregelung mittels Nebengenerator und Frequenzumrichter durchzuführen, kann vorteilhafterweise mit den ohnehin benötigten Komponenten wie z.B. Anfahrumrichtern für Gasturbinen kombiniert werden. Somit ergibt sich die Möglichkeit, alle Vorzüge einer Drehzahlregelung bei moderaten Investitionskostensteigerungen nutzen zu können.

Die Turbinenauslegung (und ggf. die Verdichterauslegung), die derzeit von einer starren Turbinendrehzahl ausgeht, kann vorteilhafterweise an die Möglichkeit der Drehzahlverstellung angepasst werden, um somit weitere Wirkungsgradverbesserungen zu erzielen. Die Notwendigkeit, die Turbine (den Verdichter) bei starrer Drehzahl so auszulegen, dass der Wirkungsgrad über einen gewissen Lastbereich nicht zu stark abfällt, würde entfallen. Durch eine Auslegung auf einen bestimmten Betriebspunkt könnte der Turbinenwirkungsgrad (Verdichterwirkungsgrad) weiter angehoben werden, und dieser verbesserte Wirkungsgrad könnte durch die Drehzahlregelung von dem Auslegungspunkt auch auf andere Betriebsbereiche übertragen werden.

Vorzugsweise wird bei Ausfall des Frequenzumrichters oder der hydrodynamischen Kupplung oder des Wandlers die dritte Welle blockiert, so dass das Umlaufgetriebe wie ein übliches Übersetzungsgetriebe weiterläuft.

Durch die Entkopplung von Netzfrequenz und Maschinendrehzahl ergeben sich folgende Vorteile:
- weiter Einsatzbereich in (GuD, DKW, KKW, Industriedampfturbinen, Wasserkraft)
- deutlich höherer Teillastwirkungsgrad sowohl für Dampfwie auch für Gasturbinen
- die maximale Leistung von Gasturbinen kann auch bei Unterfrequenz im Netz abgerufen werden
- derzeit gängige Maßnahmen zur temporären Leistungssteigerung von Gasturbinen bei Unterfrequenz können eingespart werden.
- keine Verringerung der Lebensdauer bei Abrufen der Maximallast bei Unterfrequenz
- niedrigere Abdampftemperaturen von Dampfturbinen im Teillastbetrieb
- Einsparpotential bei Stillstands-Drehwerk und Anfahrumrichter
- flexiblere An- und Abfahrprozeduren
- schnelleres Stoppen der Maschine nach dem Abschalten
- der Turbinenwirkungsgrad kann zusätzlich durch eine veränderte Turbinenauslegung verbessert werden.
- moderate Investitionskosten
- bei Industrieturbinen könnte die Funktion des Übersetzungsgetriebes gleichzeitig in das Umlaufgetriebe integriert werden
- bei Ausfall des Frequenzumrichters könnte durch Blockieren der drehzahlgeregelten Welle das Umlaufgetriebe wie ein übliches Übersetzungsgetriebe weiterlaufen, wodurch ein weiterer Betrieb der Anlage gewährleistet wird.

Die Erfindung wird beispielhaft anhand der Zeichnungen näher erläutert. Es zeigen schematisch und nicht maßstäblich:
Figur 1 ein Beispiel einer Kraftwerksanlage nach der Erfindung,
Figur 2 eine weiteres Beispiel einer Kraftwerksanlage nach der Erfindung,
Figur 3 ein Beispiel für ein Regelungskonzept, bei dem ein Drehzahlsollwert anhand eines aktuellen Leistungssollwertes berechnet wird,
Figur 4 ein Beispiel für ein Regelungskonzept, bei dem ein Drehzahlsollwert anhand einer aktuellen Leistung berechnet wird und
Figur 5 ein Beispiel für ein Regelungskonzept, bei dem eine Gasturbinenaustrittstemperatur über die Drehzahl der Turbine geregelt wird.

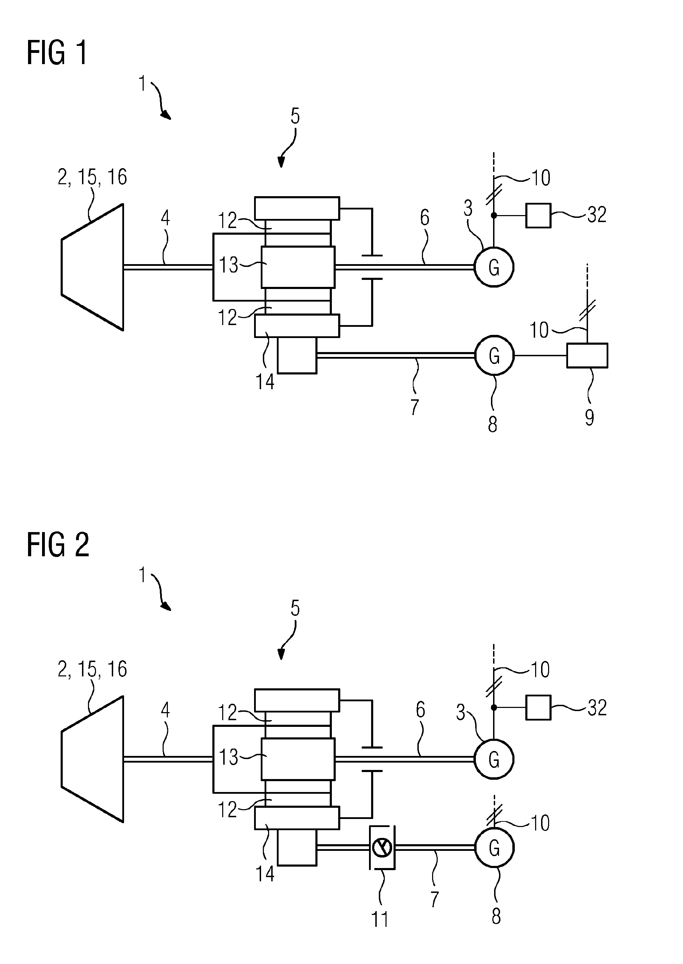

Die Figur 1 zeigt schematisch und beispielhaft eine Kraftwerksanlage 1 nach der Erfindung. Die Kraftwerksanlage 1 weist eine Turbine 2 auf, die beispielsweise eine Dampfturbine 15 oder eine Gasturbine 16 sein kann. Die Turbine 2 ist auf einer ersten Welle 4 angeordnet. Ferner weist die Kraftwerksanlage 1 einen Generator 3 auf, der auf einer zweiten Welle 6 angeordnet und an ein elektrisches Stromnetz 10 angeschlossen ist. Turbine 2 und Generator 3 sind über die erste 4 und die zweite Welle 6 mit einem Überlagerungsgetriebe 5 verbunden. An der dritten Welle 7 des Überlagerungsgetriebes 5 ist ein Nebengenerator 8 angeordnet, welcher ebenfalls an das elektrische Stromnetz 10 angeschlossen ist. Im Ausführungsbeispiel der Figur 1 ist zu diesem Zweck ein Frequenzumrichter 9 zwischen Nebengenerator 8 und elektrisches Stromnetz 10 geschaltet, mit dem die dritte Welle 7 drehzahlgeregelt wird. Ferner zeigt Figur 1 einen Anfahrumrichter 32 für den Generator 3.

Figur 2 zeigt eine alternative Ausführungsform, bei der zur Drehzahlregelung der dritten Welle 7 eine hydrodynamische Kupplung oder ein hydrodynamischer Wandler 11 zwischen Überlagerungsgetriebe 5 und Nebengenerator 8 geschaltet ist.

In den Ausführungsbeispielen der Figuren 1 und 2 sind Umlaufräder 12 des Überlagerungsgetriebes 5 mit der ersten Welle 4 an die Turbine 2 gekoppelt. Ein zentrales Sonnenrad 13 des Überlagerungsgetriebes 5 ist mit der zweiten Welle 6 an den Generator 3 gekoppelt und ein Hohlrad 14 des Überlagerungsgetriebes 5 ist über die dritte Welle 7 an den Nebengenerator 8 gekoppelt. Neben diesem Ausführungsbeispiel gibt es für das Umlaufgetriebe 5 weitere Varianten, die eine unterschiedliche Anordnung von Generator 3, Nebengenerator 8 und Turbine 2 vorsehen, welche ebenfalls von der Erfindung umfasst sind.

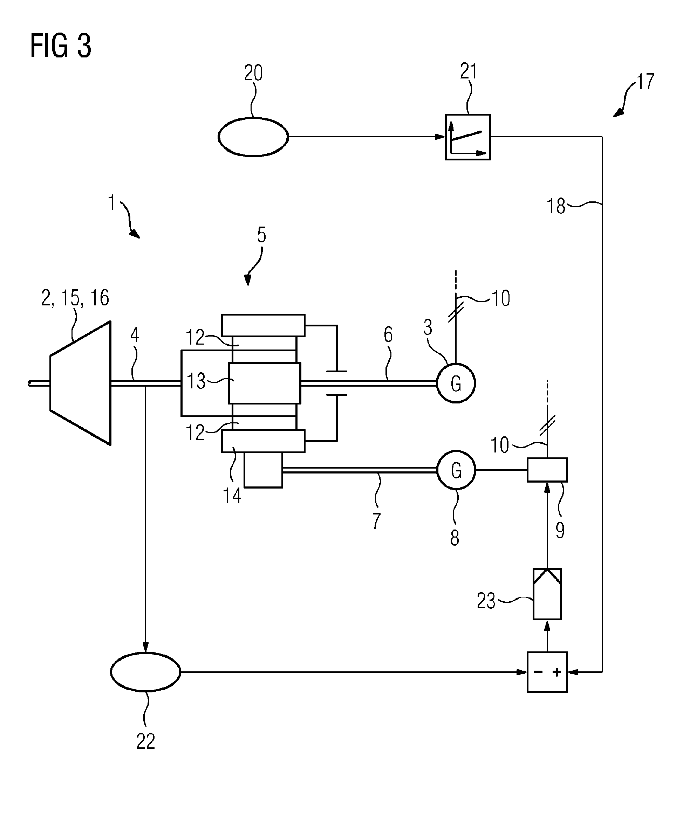

Figur 3 zeigt ein erstes Beispiel für eine Einrichtung 17 zur Berechnung und Regelung eines Drehzahlsollwertes 18 der Turbine 2. Hierbei wird ausgehend von einem aktuellen Leistungssollwert 20 der Kraftwerksanlage 1 über ein Kennfeld 21 ein Drehzahlsollwert 18 für die Turbine 2 bestimmt. Dieser berechnete Drehzahlsollwert 18 wird mit einem Istwert der Drehzahl 22 abgeglichen und das Ergebnis des Abgleichs wird genutzt, um über einen Regler 23 den Frequenzumrichter 9 entsprechend anzusteuern. Da die Drehzahl des Generators 3 an der zweiten Welle 6 durch die Netzfrequenz vorgegeben ist, wird somit direkt die Turbinendrehzahl eingestellt.

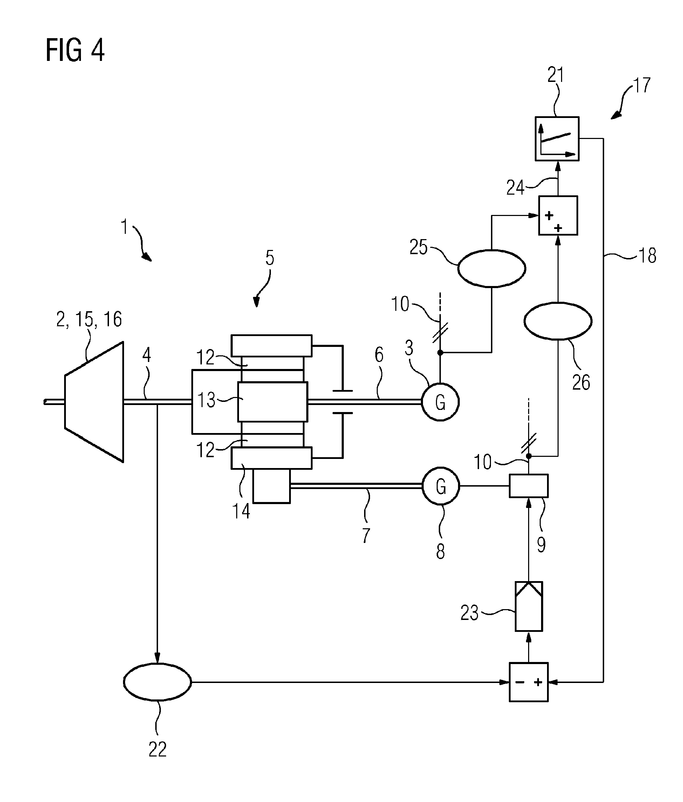

Ein weiteres Beispiel für eine Einrichtung 17 zur Berechnung und Regelung eines Drehzahlsollwertes 18 der Turbine 2 ist in der Figur 4 gezeigt. In diesem Beispiel wird der Drehzahlsollwert 18 der Turbine 2 anhand der aktuellen Leistung 24 der Kraftwerksanlage 1 über ein Kennfeld 21 ermittelt. Im Gegensatz zum Beispiel der Figur 3 wird hier anstelle des Leistungssollwertes 20 der Kraftwerksanlage 1 die Summe der elektrischen Leistungen 25, 26 am Generator 3 und am Nebengenerator 8 als Ausgangswert für die Ermittlung eines Drehzahlsollwertes 18 für die Turbine 2 herangezogen.

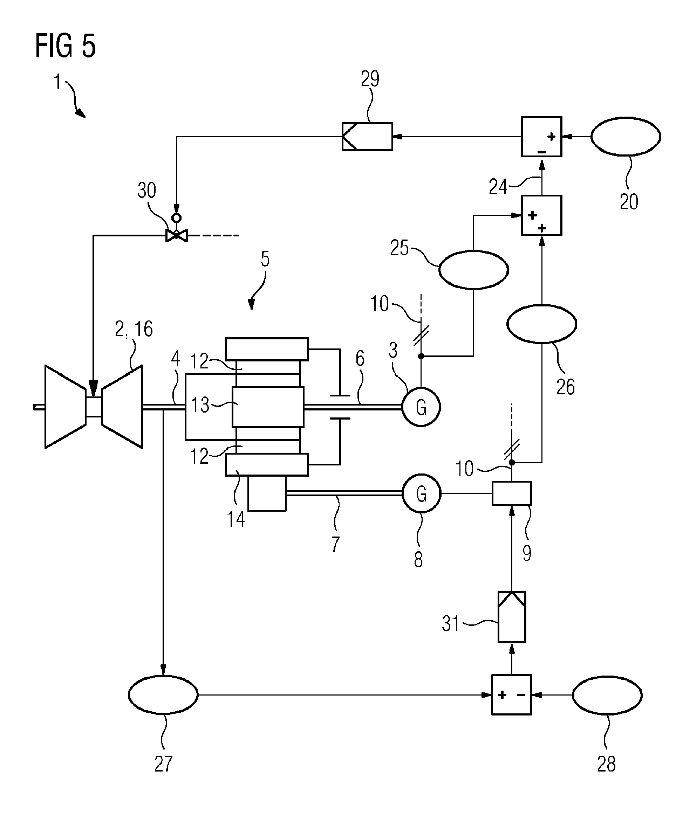

Figur 5 zeigt ein weiteres beispielhaftes Regelkonzept, bei dem eine Regelung der Gasturbinenaustrittstemperatur 27 über die Drehzahl der Welle 4 anstatt mit einer üblichen Leitschaufelverstellung erfolgt. Hierbei werden ein Leistungssollwert 20 der Kraftwerksanlage 1 und ein Temperatursollwert 28 für den Gasturbinenaustritt vorgegeben. Der Leistungssollwert 20 wird mit der Summe 24 der elektrischen Leistungen 25, 26 von Generator 3 und Nebengenerator 8 verglichen und über einen Regler 29 wird entsprechend die Brennstoffzufuhr 30 zur Gasturbine 16 eingestellt. Ein sich ergebender Istwert für die Austrittstemperatur 27 wird mit dem Temperatursollwert 28 verglichen und je nach Abweichung wird über einen Regler 31 der Frequenzumrichter 9 eingestellt, der wiederum über den Nebengenerator 8 und das Überlagerungsgetriebe 5 die Drehzahl der Welle 4 bestimmt.

Selbstverständlich kann das in den Figur 5 beschriebene Konzept der Regelung der Gasturbinenaustrittstemperatur 27 auch in Kombination mit dem bisher üblichen Verfahren der Leitschaufelverstellung kombiniert werden.

## Patentansprüche

1. Kraftwerksanlage (1) mit einer Turbine (2) und mit einem Generator (3), **dadurch gekennzeichnet, dass** eine erste Welle (4) eines Überlagerungsgetriebes (5) mit der Turbine (2), eine zweite Welle (6) des Überlagerungsgetriebes (5) mit dem Generator (3) und eine dritte Welle (7) des Überlagerungsgetriebes (5) mit einem Nebengenerator (8) verbunden ist, wobei die dritte Welle (7) drehzahlgeregelt ist.

2. Kraftwerksanlage (1) nach Anspruch 1, wobei der Nebengenerator (8) über einen Frequenzumrichter (9) in ein elektrisches Stromnetz (10) koppelbar ist.

3. Kraftwerksanlage (1) nach Anspruch 1, wobei zur Drehzahlregelung der dritten Welle (7) eine hydrodynamische Kupplung oder ein hydrodynamischer Wandler (11) zwischen Überlagerungsgetriebe (5) und Nebengenerator (8) in die dritte Welle (7) geschaltet ist.

4. Kraftwerksanlage (1) nach einem der Ansprüche 1 bis 3, wobei der Nebengenerator (8) eine geringere Leistung aufweist als der Generator (3).

5. Kraftwerksanlage (1) nach einem der Ansprüche 1 bis 4, wobei eine Leistungsgröße des Frequenzumrichters (9) 5 % bis 25% einer elektrischen Leistung der Kraftwerksanlage (1) beträgt.

6. Kraftwerksanlage (1) nach einem der vorhergehenden Ansprüche, wobei das Überlagerungsgetriebe (5) ein Verteilgetriebe ist, bei dem die Turbine (2) auf einer antreibenden ersten Welle (4) und der Generator (3) und der Nebengenerator (8) auf von dieser gemeinsam angetriebenen zweiten (6) und dritten Wellen (7) sitzen.

7. Kraftwerksanlage (1) nach einem der vorhergehenden Ansprüche, wobei Umlaufräder (12) des Überlagerungsgetriebes (5) mit der ersten Welle (4) an die Turbine (2) gekoppelt sind, ein zentrales Sonnenrad (13) des Überlagerungsgetriebes (5) mit der zweiten Welle (6)an den Generator (3) gekoppelt ist und ein Hohlrad (14) des Überlagerungsgetriebes (5) über die dritte Welle (7) an den Nebengenerator (8) gekoppelt ist.

8. Kraftwerksanlage (1) nach einem der vorhergehenden Ansprüche, umfassend eine mit dem Überlagerungsgetriebe (5) verbundene Dampfturbine (15).

9. Kraftwerksanlage (1) nach einem der Ansprüche 1 bis 7, umfassend eine mit dem Überlagerungsgetriebe (5) verbundene Gasturbine (16).

10. Kraftwerksanlage (1) nach Anspruch 9, wobei zum Anfahren der Gasturbine (16) der Frequenzumrichter (9) auf den Generator (3) umschaltbar ist.

11. Kraftwerksanlage (1) nach einem der vorhergehenden Ansprüche, weiter umfassend eine Einrichtung (17) zur Berechnung und Regelung eines Drehzahlsollwertes (18) der Turbine (2) in Abhängigkeit einer Leistung der Kraftwerksanlage (1).

12. Verfahren zur elektrischen Energieerzeugung und Netzeinspeisung, bei dem eine Turbine (2) eine erste Welle (4) mit einem Drehmoment antreibt, und das Drehmoment auf eine zweite Welle (6) mit einem Generator (3) und eine dritte Welle (7) mit einem Nebengenerator (8) verteilt wird, wobei der Generator (3) starr mit einer Netzfrequenz gekoppelt seine elektrische Leistung in ein Stromnetz (10) abgibt und die dritte Welle (7) zum Nebengenerator (8), dessen elektrische Leistung geringer ist, als die elektrischer Leistung des Generators (3), drehzahlgeregelt wird.

13. Verfahren nach Anspruch 12, wobei der Nebengenerator (8) seine elektrische Leistung über einen Frequenzumrichter (9) in das Stromnetz (10) abgibt.

14. Verfahren nach Anspruch 13, wobei die Turbine (2) mit Hilfe des Frequenzumrichters (9) angefahren wird.

15. Verfahren nach Anspruch 14, wobei der Frequenzumrichter (9) auf den Generator (3) umgeschaltet wird.

16. Verfahren nach Anspruch 13, wobei der Frequenzumrichter (9) die Turbine (2) im Stillstand mit einer Drehzahl unter 5/s dreht.

17. Verfahren nach Anspruch 12, wobei eine Drehzahlregelung der dritten Welle (7) über eine hydrodynamische Kupplung oder einen hydrodynamischen Wandler (11) erfolgt.

18. Verfahren nach einem der Ansprüche 12 bis 17, wobei ein Drehzahlsollwert (18) für die Turbine (2) anhand einer elektrischen Leistung berechnet und die berechnete Drehzahl über den Frequenzumrichter (9) oder über die hydrodynamische Kupplung oder den hydrodynamischen Wandler (11) eingestellt wird.

19. Verfahren nach einem der Ansprüche 12 bis 17, wobei ein Drehzahlsollwert (18) für die Turbine (2) über eine Auswertung thermodynamischer Parameter bestimmt wird.

20. Verfahren nach einem der Ansprüche 12 bis 19, wobei die Turbine (2) in Teillast betrieben wird und sich mit einer Frequenz unterhalb einer Nennfrequenz dreht.

21. Verfahren nach einem der Ansprüche 12 bis 19, wobei die Turbine (2) bei absinkender Netzfrequenz oder bei Überlast mit höherer Frequenz als die Netzfrequenz dreht.

22. Verfahren nach einem der Ansprüche 20 oder 21, wobei infolge einer Änderung einer Turbinendrehzahl eine Optimierung einer Turbinenbeschaufelung erfolgt.

23. Verfahren nach einem der Ansprüche 12, 13, 17, 20 und 21, wobei eine Austrittstemperaturregelung zumindest teilweise über eine Drehzahlregelung erfolgt.

24. Verfahren nach einem der Ansprüche 13 oder 17, wobei bei Ausfall des Frequenzumrichters (9) oder der hydrodynamischen Kupplung oder des Wandlers (11) durch Blockieren der dritten Welle (7) das Umlaufgetriebe (5) wie ein übliches Übersetzungsgetriebe weiterläuft.
